# EUROPÄISCHE PATENTANMELDUNG

(11) **EP 0 908 703 A1**
(43) Veröffentlichungstag der Anmeldung: **14.04.1999**
(21) Anmeldenummer: 98114287.0
(22) Anmeldetag: 30.07.1998
(51) Int. Cl.: G01F 1/684

(54) **Vorrichtung zur Messung der Masse eines strömenden Mediums**

(30) Priorität: 11.10.1997 DE 19744997
(71) Anmelder: ROBERT BOSCH GMBH, 70442 Stuttgart (DE)
(72) Erfinder: Hecht, Hans, Dipl.-Phys, 70825 Korntal-Münchingen (DE); Kromer, Alexander, Dipl.-Ing. (FH), 71691 Freiberg a N. (DE); Konzelmann, Uwe, 71679 Asperg (DE); Marberg, Henning, 71263 Weil der Stadt (DE)

(57) **Zusammenfassung**

Bekannte Sensorträger besitzen eine Ausnehmung, in der ein Sensorelement mittels eines Klebemittels angeklebt ist.

Die erfindungsgemäße Vorrichtung hat ein plattenförmiges Sensorelement (2), das in einer Ausnehmung (20) eines Sensorträgers (1) untergebracht und mit einem wenigstens einen Meßwiderstand aufweisenden Sensorbereich (3) dem strömenden Medium ausgesetzt ist, wobei ein Spalt (23, 24) zwischen dem Sensorelement (2) und der Ausnehmung (20) verbleibt. Zum Schutz einer mit dem Sensorelement (2) verbundenen Auswerteschaltung (11) gegenüber Feuchtigkeit ist erfindungsgemäß vorgesehen, daß zumindest Teilbereiche der Auswerteschaltung (11) und Teilbereiche des Sensorelements (2) von einer Schutzschicht (42) bedeckt werden, wobei der Spalt (23, 24) zumindest eine Erweiterung (45) aufweist, mittels der sich das Fließen der Schutzschicht (42) beeinflussen läßt.

Die erfindungsgemäße Vorrichtung dient zur Messung der Masse eines strömenden Mediums, insbesondere der Ansaugluftmasse von Brennkraftmaschinen.

## Beschreibung

### Stand der Technik

Die Erfindung geht aus von einer Vorrichtung zur Messung der Masse eines strömenden Mediums nach der Gattung des Anspruchs 1. Es ist bereits eine Vorrichtung bekannt (DE-OS 195 24 634), die ein plattenförmiges Sensorelement besitzt, das in einer Ausnehmung eines Sensorträgers untergebracht und mit einem wenigstens einen Meßwiderstand aufweisenden Sensorbereich dem strömenden Medium ausgesetzt ist. Das Sensorelement ist in der Ausnehmung mittels Klebstoff teilweise angeklebt und besitzt zur Verbindung mit dem wenigstens einen aktiven Meßbereich des Sensorelements einen Kontaktierungsbereich, von welchem Verbindungsleitungen zu einer Auswerteschaltung führen. Das Sensorelement ist in der Ausnehmung im wesentlichen wandbündig eingebaut, um eine Strömung am Sensorelement ohne Strömungsablösungen zu erhalten. Zwischen dem Sensorelement und den Wänden der Ausnehmung ist ein Spalt vorhanden, der fertigungsbedingt ist und sich aus Toleranzgründen nicht ganz vermeiden läßt. Des weiteren sind die elektronischen Bauteile der Auswerteschaltung sowie die Verbindungsleitungen zum Kontaktierungsbereich des Sensorelements gegenüber Feuchtigkeit zu schützen, wie sie beim Betrieb der Vorrichtung in einem Kraftfahrzeug auftreten kann.

### Vorteile der Erfindung

Die erfindungsgemäße Vorrichtung mit den kennzeichnenden Merkmalen des Anspruchs 1 hat demgegenüber den Vorteil eines verbesserten Schutzes der Bauteile der Auswerteschaltung sowie der Verbindungsleitungen zu dem Kontaktierungsbereich des Sensorelements gegenüber Feuchtigkeit. Besonders vorteilhaft sind dabei vorgesehene Erweiterungen eines Spalts, der zwischen Sensorelement und den Wandungen der Ausnehmung verläuft, um mittels der Erweiterungen ein Weiterfließen einer zumindest teilweise auf die Auswerteschaltung aufgebrachten Schutzschicht im Spalt zuverlässig zu stoppen, so daß der Fließweg der Schutzschicht stets eindeutig definiert bleibt.

Durch die in den Unteransprüchen aufgeführten Maßnahmen sind vorteilhafte Weiterbildungen und Verbesserungen der im Anspruch 1 angegebenen Vorrichtung möglich.

Besonders vorteilhaft ist eine zwischen der Auswerteschaltung und dem Sensorelement vorgesehene Trennwand, die es in Verbindung mit einer Abdeckung ermöglicht, Bauteile der Auswerteschaltung vor äußeren Einflüssen sicher zu schützen, wobei außerdem eine verbesserte Strömungsführung am Sensorelement erzielt wird. In einer vorteilhafteren Weiterbildung der Erfindung kann es sich bei der Schutzschicht auch um den Klebstoff handeln, der zum Kleben des Sensorelements in der Ausnehmung verwendet wird. Vorteilhaft ist des weiteren, daß die Spalterweiterungen ohne besonderen Zusatzaufwand beim Herstellen des Sensorträgers vorgesehen werden können.

### Zeichnung

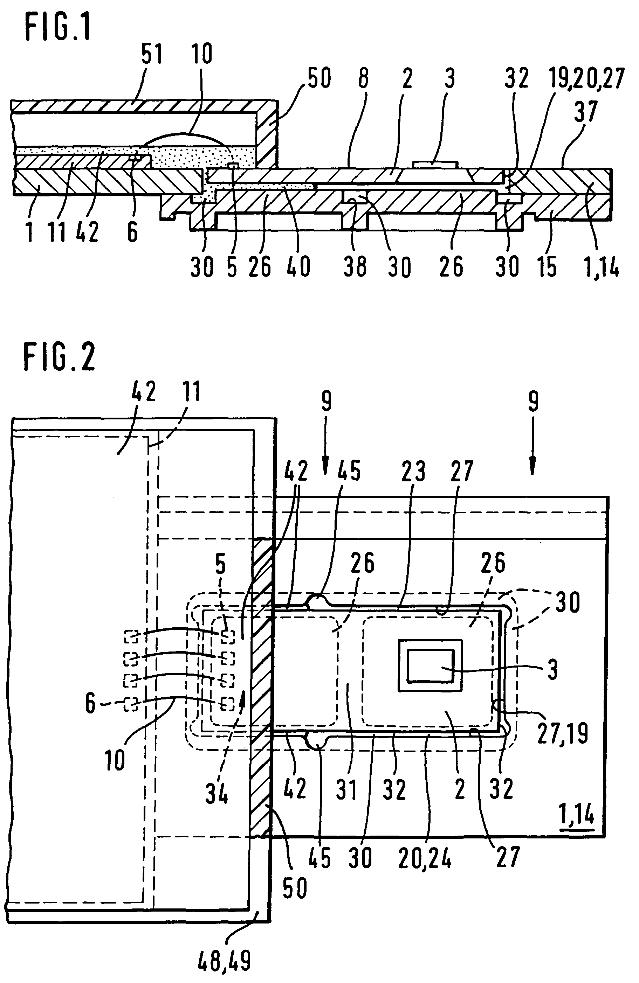

Ein Ausführungsbeispiel der Erfindung ist in der Zeichnung vereinfacht dargestellt und in der nachfolgenden Beschreibung näher erläutert. Es zeigen Figur 1 eine Querschnittsdarstellung eines Sensorträgers mit Sensorelement, Figur 2 eine Draufsicht auf den Sensorträger nach Figur 1.

### Beschreibung des Ausführungsbeispiels

In Figur 1 ist im Querschnitt ein Sensorträger 1 dargestellt, der zur Aufnahme eines plattenförmigen Sensorelements 2 vorgesehen ist. Der Sensorträger 1 und das Sensorelement 2 sind Teil einer nicht näher dargestellten Vorrichtung zur Messung der Masse eines strömenden Mediums, insbesondere der Ansaugluftmasse einer Brennkraftmaschine. Das Sensorelement 2 hat einen membranförmigen Sensorbereich 3, der beispielsweise in Form einer dielektrischen Membran ausgebildet ist. Das Sensorelement 2, beziehungsweise die Membran, kann durch Ausätzen eines Halbleiterkörpers, beispielsweise eines Siliziumwafers, in sogenannter mikromechanischer Bauweise hergestellt werden. Auf der Membran sind ein Heizwiderstand und verschiedene Temperaturfühler angeordnet. In der Mitte der Membran befindet sich ein Heizbereich, der mit Hilfe des Heizwiderstandes und eines Temperaturfühlers auf eine Übertemperatur geregelt wird, deren Wert von der Temperatur der anströmenden Luft abhängt. Stromauf und stromab des Heizbereichs befinden sich beispielsweise zwei zum Heizbereich symmetrisch angeordnete Temperaturfühler, die ohne eine Anströmung dieselbe Temperatur aufweisen. Im Meßbetrieb beziehungsweise bei Anströmung des Sensorbereichs 3 wird durch die Wärmeübertragung in der Grenzschicht insbesondere der stromauf des Heizbereichs liegende Teil der Membran beziehungsweise der dortige Temperaturfühler abgekühlt. Der stromab vom Heizbereich liegende Temperaturfühler kann aber durch die vom Heizbereich erwärmte Luft näherungsweise seine Temperatur beibehalten. Aufgrund der Temperaturdifferenz beider Temperaturfühler kann somit neben dem Betrag auch die Richtung des strömenden Mediums festgestellt werden. Der Heizbereich sowie die beiden Temperaturfühler sind durch Leiterbahnen und mittels Verbindungsleitungen 10, zum Beispiel in Form von Drähten, mit einer elektronischen Auswerteschaltung 11 elektrisch verbunden. Die Auswerteschaltung 11 verfügt ebenfalls über mehrere Bondpads 6, an denen die Drähte 10 angebracht werden können. Die Auswerteschaltung 11 ist vorzugsweise in Dickschichttechnik ausgebildet und auf einem Substrat aufgebracht. Das Substrat mit der Auswerteschaltung 11 ist dabei auf dem Sensorträger 1 zum Beispiel aufgeklebt, der beispielsweise in einem weiteren, die Auswerteschaltung 11 umgebenden Gehäuseteil 48 der Vorrichtung aufgenommen ist. Die Auswerteschaltung 11 besitzt eine Vielzahl elektronischer Bauteile und dient in bekannter Weise zur Strom- beziehungsweise Spannungsversorgung der Widerstände auf dem Sensorelement 2 und zur Auswertung der von den Widerständen abgegebenen elektrischen Signale.

Das Sensorelement 2 hat eine plattenförmige, beispielsweise rechteckige Form und ist mit seiner größten Oberfläche 8 in etwa parallel zum in die Zeichenebene der Figur 1 hineinströmenden Medium ausgerichtet, wobei eine kurze Seite des beispielsweise rechteckigen Sensorelements 2 in Strömungsrichtung verläuft. Die Strömungsrichtung des Mediums ist in Figur 2 durch entsprechende Pfeile 9 gekennzeichnet. Der Sensorträger 1 besteht vorzugsweise aus Metall und kann durch Falten eines dünnen Metallstreifens hergestellt werden, wofür sich Stanz-, Biege-, Falt-, Tiefzieh- und Prägeverfahren eignen. Im Endzustand des gebogenen Metallstreifens liegen etwa zwei gleich große Elemente 14 und 15 aneinander. Im folgenden wird das das Sensorelement 2 umgebende, nicht gebogene Element als Rahmenelement 14 und das darunter gebogene Element als Halteelement 15 bezeichnet. Das Halteelement 15 bedeckt eine Öffnung 19 des Rahmenelements 14, um gemeinsam mit dem Rahmenelement 14 eine Ausnehmung 20 zur Aufnahme des Sensorelements 2 zu begrenzen. Das Sensorelement 2 ist in der Ausnehmung 20 mit seiner Oberfläche 8 in etwa fluchtend zu einer Oberfläche 37 des Rahmenelements 14 untergebracht. Eine Bodenfläche 38 der Ausnehmung 20 weist beispielsweise zwei plateauförmige Erhebungen 26 auf. Das Sensorelement 2 ist an der in Figuren 1 und 2 links dargestellten Erhebung 26 mittels eines Klebemittels 40 angeklebt, so daß der Sensorbereich 3 quasi freitragend in der Ausnehmung 20 gehalten wird. Zwischen den plateauförmigen Erhebungen 26 selbst sowie den plateauförmigen Erhebungen 26 und den die Ausnehmung 20 begrenzenden Wänden 27 verläuft eine rinnenförmige Vertiefung 30. Die Wände 27 können dabei mit einem Versatz ausgebildet sein, so daß ein Teil der rinnenförmigen Vertiefung 30 von den Wänden 27 bedeckt wird.

Das Sensorelement 2 hat in der Draufsicht gemäß Figur 2 einen etwas kleineren Querschnitt als die Ausnehmung 20, so daß sich zwischen umlaufenden Seitenflächen 32 des Sensorelements 2 und den Wänden 27 des Rahmenelements 14 entlang des Umfangs des Sensorelements 2 ein äußerst geringer Spalt 23 auf der stromaufwärts gerichteten Seite und ein äußerst geringer Spalt 24 auf der stromabwärts gerichteten Seite ergibt. Der Spalt 23, 24 hat eine Breite, die in der Größenordnung von wenigen Mikrometern liegt.

Zum Schutz der nicht näher dargestellten Bauteile der Auswerteschaltung 11 und eines die Bondpads 5 umgebenden Teilbereiches 34 des Sensorelements 2 ist erfindungsgemäß vorgesehen, zumindest Teilbereiche der Auswerteschaltung 11 und den Teilbereich 34 des Sensorelements 2 mit einer Schutzschicht 42 zu bedecken. Bei der Schutzschicht 42 kann es sich beispielsweise um ein Silikon-Gel handeln, das beim Aufbringen fließen kann und sich erst nach gewisser Zeit verfestigt. Es kann sich dabei auch um denselben Klebstoff 40 handeln, der zum Kleben des Sensorelements 2 in der Ausnehmung 20 verwendet wird. Beim Aufbringen der Schutzschicht 42 auf die Auswerteschaltung 11 gelangt dieses noch fließfähige Mittel auch in den Spalt 23, 24 der Ausnehmung 20. Das Fließen des Mittels der Schutzschicht 42 wird dabei durch Kapillarkräfte des Spalts 23 beziehungsweise 24 beeinflußt. Um dabei ein undefiniertes Fortschreiten des Schutzschichtmittels 42 im Spalt 23, 24 vermeiden zu können, sind Spalterweiterungen 45 vorgesehen, die beispielsweise, wie in Figur 2 näher dargestellt ist, im Bereich der in Figur 2 links gelegenen Erhebung 26 in der Nähe eines in Strömungsrichtung 9 verlaufenden, etwa die Mitte der Ausnehmung 20 darstellenden Abschnitts 31 der rinnenförmigen Vertiefung 30 vorgesehen sind. Die Spalterweiterungen 45 haben vorzugsweise eine halbkreisförmige, dreieckige oder rechteckige Form und können beim Herstellen des Sensorträgers 1 beispielsweise durch Ausstanzen an den Wänden 27 ohne großen Zusatzaufwand hergestellt werden. Die Spalterweiterungen 45 stellen also Bereiche dar, die als Vertiefungen in die Wände 27 der Ausnehmung 20 oder des Sensorelements 2 eingearbeitet sind. Ohne derartige Spalterweiterungen 45 besteht die Gefahr, daß das Mittel der Schutzschicht 42 im Spalt 23, 24 in die Nähe des Sensorbereichs 3 des Sensorelements 2 gelangen kann. Dies hätte jedoch dann eine unerwünschte Wärmeabfuhr vom Sensorbereich 3 zum Sensorträger 1 zur Folge.

Zur Trennung des umströmten, mit Sensorelement 2 und Sensorbereich 3 versehenen Sensorträgers 1 von dem mit der Auswerteschaltung 11 ausgestatteten Elektronikbereich ist eine Trennwand 50 vorgesehen, die vorzugsweise aus Kunststoff besteht. Die Trennwand 50 liegt an der Oberfläche 8 des Sensorelements 2 und an der Oberfläche 37 des Rahmenelements 14 des Sensorträgers 1 an. Beim Aufbringen der Schutzschicht 42 auf die Auswerteschaltung 11 stoppt diese Trennwand 50 ein Weiterfließen, so daß die Schutzschicht 42 nur in den Spalten 23, 24 bis zu den Spalterweiterungen 45 weiterfließen kann. Wie in Figur 1 dargestellt ist, bedeckt die Schutzschicht 42 dabei auch zumindest teilweise die Drähte 10 zu deren Schutz. Zur Halterung der Trennwand 50 ist diese zum Beispiel steckbar in einer zangenförmigen Umrandung 49 der Auswerteschaltung 11 untergebracht, die beispielsweise Teil des Sensorträgers 1 oder auch Teil eines weiteren Gehäuseteils 48 der Vorrichtung sein kann. Es ist auch möglich, wie in Figur 1 dargestellt ist, eine Abdeckung in Form eines Deckels 51 vorzusehen, der die Auswerteschaltung 11 umgibt und außerdem die Trennwand 50 bereitstellt.

## Patentansprüche

1. Vorrichtung zur Messung der Masse eines strömenden Mediums, insbesondere der Ansaugluftmasse von Brennkraftmaschinen, mit einem plattenförmigen Sensorelement, das in einer Ausnehmung eines Sensorträgers untergebracht und mit einem wenigstens einen Meßwiderstand aufweisenden Sensorbereich dem strömenden Medium ausgesetzt und in der Ausnehmung mittels Klebung gehalten ist, und mit einer Auswerteschaltung zur Auswertung der elektrischen Signale des Meßwiderstandes, wobei ein Spalt zwischen dem Sensorelement und der Ausnehmung verbleibt, dadurch gekennzeichnet, daß zumindest Teilbereiche der Auswerteschaltung (11) und Teilbereiche (34) des Sensorelements (2) von einer Schutzschicht (42) bedeckt sind, und der Spalt (23, 24) zumindest eine Erweiterung (45) aufweist, mittels der sich das Fließen der Schutzschicht (42) beeinflussen läßt.

2. Vorrichtung nach Anspruch 1, dadurch gekennzeichnet, daß die Schutzschicht (42) den Spalt (23, 24) teilweise ausfüllt.

3. Vorrichtung nach Anspruch 1, dadurch gekennzeichnet, daß zwischen der Auswerteschaltung (11) und dem Sensorelement (2) eine Trennwand (50) vorgesehen ist.

4. Vorrichtung nach Anspruch 3, dadurch gekennzeichnet, daß die Trennwand (50) aus Kunststoff besteht.

5. Vorrichtung nach Anspruch 3, dadurch gekennzeichnet, daß die Trennwand (50) Teil einer Abdeckung (51) der Auswerteschaltung (11) ist.

6. Vorrichtung nach Anspruch 4 oder 5, dadurch gekennzeichnet, daß die Trennwand (50) in einer zangenförmigen Umrandung (49) der Auswerteschaltung (11) untergebracht ist.

7. Vorrichtung nach Anspruch 1, dadurch gekennzeichnet, daß die zumindest eine Spalterweiterung (45) eine halbkreisförmige Form besitzt.

8. Vorrichtung nach Anspruch 1, dadurch gekennzeichnet, daß die zumindest eine Spalterweiterung (45) zwischen dem Sensorbereich (3) des Sensorelements (2) und Anschlüssen (5) des Sensorelements (2) vorgesehen ist.

9. Vorrichtung nach Anspruch 1, dadurch gekennzeichnet, daß die Schutzschicht (42) aus einem Silikon-Gel besteht.

10. Vorrichtung nach Anspruch 1 oder 9, dadurch gekennzeichnet, daß als Schutzschicht (42) das Klebemittel (40) zum Kleben des Sensorelements (2) in der Ausnehmung (20) verwendet wird.
